# EUROPÄISCHE PATENTSCHRIFT

(11) **EP 2 211 628 B1**
(45) Veröffentlichungstag und Bekanntmachung des Hinweises auf die Patenterteilung: **16.03.2011**
(21) Anmeldenummer: 08836795.8
(22) Anmeldetag: 02.10.2008
(51) Int. Cl.: A22C 11/00, A23L 1/317

(54) **VERFAHREN ZUR HERSTELLUNG VON GEFORMTER ROHWURST**
METHOD FOR THE PRODUCTION OF MOLDED RAW SAUSAGE
PROCÉDÉ DE PRODUCTION DE SAUCISSE CRUE FAÇONNÉE

(30) Priorität: 05.10.2007 DE 102007052000
(43) Veröffentlichungstag der Anmeldung: 04.08.2010
(73) Patentinhaber: Böklunder Plumrose GmbH & Co. KG, 24860 Böklund (DE)
(72) Erfinder: BERGT, Jörg, 49214 Bad Rothenfelde (DE); NEUKUM, Gerhard, 24966 Sörup (DE)
(74) Vertreter: Raffay & Fleck
(86) Internationale Anmeldenummer: PCT/EP2008/063231
(87) Internationale Veröffentlichungsnummer: WO 2009/047207

(56) Entgegenhaltungen:
- EP-A- 1 779 733
- DE-A1- 3 912 072
- DE-A1- 10 343 409
- DE-U1- 9 421 173
- US-A1- 2004 170 723

## Beschreibung

### Technisches Gebiet

Die Erfindung betrifft ein Verfahren zur Herstellung von geformter, schnittfester Rohwurst.

### Stand der Technik

Schnittfeste Rohwurst, z.B. schnittfeste Mettwurst oder Salami, wird klassischer Weise in langgestreckten, im Wesentlichen zylindrisch geformten Därmen angeboten und entweder als Ganzes bzw. in Abschnitten oder aber aufgeschnitten zu Scheiben verkauft. Außerdem gibt es bereits zu Scheiben aufgeschnittene schnittfeste Rohwurst, die portioniert abgepackt aus dem Kühlregal erworben werden kann.

Seit einiger Zeit gibt es ein Angebot von und dabei auch eine verstärkte Nachfrage nach schnittfester Rohwurst in von der klassischen im Wesentlichen kreiszylindrischen Form abweichender Außengestalt. Insbesondere erfreut sich schnittfeste Rohwurst in Form von "Wurstlaiben" steigender Beliebtheit, die ähnlich wie Käselaibe oder Brotlaibe geformt sind oder in ähnlicher Portionsgröße sogar andere Außenkonturen (z.B. kleeblattförmig) aufweisen und entweder portionsweise verkauft oder aber auch aufgeschnitten angeboten werden können. Dabei ist es insbesondere wünschenswert, solchermaßen geformte Wurst in unterschiedlichen Formgestalten anbieten zu können, z.B. eine Sternform in der Advents- und Weihnachtszeit, eine Herzform oder dergleichen. Insbesondere interessant sind hier also von einer Kreisform abweichende Außenkonturen.

Solchermaßen gestaltete Rohwurst kann mit bisher bekannten Herstellungsverfahren nur schwer und mit umständlichen und kostspieligen Verfahrensabläufen hergestellt werden. So ist es z.B. bekannt, Därme zu verwenden, die durch ihre Form eine bestimmte Außenkontur vorgeben und diese Därme dann mit der Rohmasse für die Wurst zu befüllen. Die so mit der Rohmasse befüllten Därme werden dann zum Fermentieren und Ausreifen gelagert bzw. weiterbehandelt, bis die schnittfeste Wurst in dem Darm in ihrer angestrebten Form verkaufs- und verzehrfertig hergestellt ist. Diese bekannte Vorgehensweise hat zum einen den Nachteil, dass die Herstellung der geformten Därme aufwendig und kostspielig ist, die Därme müssen zum anderen als Verbrauchsgüter gesondert erworben werden, sie werden z.B. aus Schnittmustern vernäht, was arbeitsaufwendig und damit kostenintensiv ist. Zum anderen ist dieses Vorgehen beschränkt hinsichtlich der erreichbaren Außenformen, insbesondere ist es hierbei ausgeschlossen, besonders scharfkantige Außenkonturen zu erzielen, wie z.B. bei einer sternförmigen Außenkontur.

Ein weiteres, im Stand der Technik bekanntes und praktiziertes Verfahren, geformte Wurstlaibe herzustellen, besteht darin, die Rohmasse in herkömmliche und nicht gesondert ausgeformte Därme zu füllen und die so gefüllten Därme dann in fixierte Formen einzupressen, vergleichbar der Formgebung mit einem Waffeleisen oder einer Prägevorrichtung. Auch dieses Verfahren ist nachteilig. Zum einen müssen nach wie vor Därme verwendet werden, die zwar nicht in einer bestimmten Art geformt sein müssen, jedoch trotzdem bei der Herstellung einen Kostenfaktor darstellen. Zudem sind die Anschaffung und auch der Betrieb der Pressvorrichtung kostenintensiv, so dass die Herstellung von geformten schnittfesten Rohwürsten nach dieser Methode ebenfalls kostenintensiv ist.

Schließlich gibt es ein weiteres Verfahren, bei dem eine vorgegebene Hohlform verwendet wird, in die die Wurstrohmasse gleichzeitig mit einem Darm, in den diese eingefüllt wird, gebracht und darin reifen gelassen wird, jedenfalls bis zum Erreichen einer gewissen Schnitt- und Standfestigkeit. Üblicherweise ist diese Hohlform dabei langgestreckt, so dass der darin enthaltene Kern in dem Darm später portionsweise aufgeschnitten und weiterverarbeitet werden kann. Auch hierbei handelt es sich um ein kostspieliges Verfahren, da der apparative Aufwand hoch und die Kosten für die Därme und die speziellen Formen ebenfalls beachtlich sind.

In der US 2004/0170723 A1 ist ein Verfahren offenbart, mit dem schnittfeste, geformte Rohwurst hergestellt werden kann. Dort wird beschrieben, wie ein mit zur Fermentierung mit Bakterien versetztes Wurstbrät durch einen Extruder mit einer formgebenden Tülle in einen eine gewünschte Außenkontur aufweisenden Strang geformt und der Strang durch Ablängen in Abschnitte aufgeteilt wird. Ob und gegebenenfalls wie die geformten Abschnitte während des Fermentierens weiter in ihrer Form gehalten werden, geht aus dieser Druckschrift nicht hervor.

### Darstellung der Erfindung

Ausgehend von diesem Stand der Technik ist es also Aufgabe der vorliegenden Erfindung, ein Verfahren anzugeben, mit welchem schnittfeste, geformte Rohwurst kostengünstig und mit wenig Aufwand in einer großen Formenvielfalt hergestellt werden kann.

Diese Aufgabe wird erfindungsgemäß gelöst durch ein Verfahren mit den Merkmalen des Patentanspruches 1. Vorteilhafte Weiterbildungen dieses Verfahrens sind in den Ansprüchen 2 bis 9 angegeben.

Erfindungsgemäß wird zunächst eine Rohmasse für die Herstellung von schnittfester Rohwurst bereitet, die zumindest zerkleinertes Fleisch und Bakterien für die Fermentation, darüber hinaus aber auch vorzugsweise Salz, Fett und Gewürze enthält. Neben diesen genannten Zutaten kann sie natürlich auch weitere, für die Herstellung von schnittfester Rohwurst übliche und an sich bekannte Inhaltsstoffe enthalten. Diese Rohmasse wird gemäß dem neu entwickelten Verfahren als Strang durch eine die gewünschte Außenform vorgebende, Kontur gebende Öffnung gepresst, und es wird ein Abschnitt des vorgeformten Stranges in eine Stützform eingelegt. Diese Stützform hat wenigsten eine bodenartige Auflage sowie Seitenbereiche, die ein Auseinanderlaufen der Kontur des in die Stützform eingelegten Stranges verhindern. Eine bodenartige Auflage im Sinne dieser Erfindung ist dabei nicht zwangsläufig ein ebener Abschnitt dieser Form, vielmehr wird dieser Abschnitt die Form der gewünschten Außenkontur aufnehmen, um den Abschnitt des Stranges der Rohmasse während der nachfolgenden Reifung in seiner Form zu halten. Um ein aufgrund des Eigengewichtes des Rohmassenstranges zu befürchtendes Auseinanderlaufen des Strangabschnittes und damit einen Verlust der gewünschten Kontur zu verhindern, sind Seitenbereiche der Stützform jedenfalls so weit hochgezogen, dass eine ausreichende Stabilisierung des Abschnittes des Stranges der Rohmasse gewährleistet werden kann. Verglichen werden kann die Stützform dem Grunde nach mit einer Backform, z.B. einer Kastenform, in die ein Kuchenteig eingefüllt wird. Im Unterschied zu einer solchen Backform ist es allerdings bei dem hier durchzuführenden Verfahren nicht zwingend erforderlich, dass die Seitenbereiche über die vollständige Höhe geführt sind, vielmehr genügt es in der Regel aufgrund der bereits in gewissem Maße vorhandenen Eigenstabilität des Rohmassenstranges, die Seitenbereiche nur über einen Teil der Gesamthöhe zu führen.

In dieser Stützform eingelegt verbleibt der Abschnitt des Stranges jedenfalls während eines anfänglichen Reifungsprozesses, während dem er eine Formstabilität erhält. Anschließend wird der Abschnitt aus der Stützform ausgeformt. Der Abschnitt kann dann entweder als Ganzes weiter verarbeitet (z.B. weiter reifen gelassen und/oder verziert) oder in den Verkauf gegeben werden oder portionsweise durch Ablängen in Wurstlaibe aufgeteilt werden. Das Ablängen kann dabei vor oder nach dem Ausformen aus der Stützform erfolgen. Dabei ist es grundsätzlich möglich, dass die Rohmasse bis zum Erreichen des fertigen, gewünschten Reifegrades in der Stützform verbleibt. Ebenso gut kann sie aber schon nach einer gewissen Reifedauer, innerhalb derer sie jedenfalls die erforderliche Formstabilität erreicht hat, ausgeformt und gegebenenfalls portioniert werden, um dann als Ganzes oder portionsweise weiterzureifen. Natürlich ist es auch denkbar, den Abschnitt des Stranges nach Erhalt der Formstabilität insgesamt auszuformen und als Strang bis zu einem fertigen Reifegrad weiterreifen zu lassen und möglicherweise anschließend erst durch Ablängen zu portionieren.

Grundsätzlich ist es zwar möglich, den Strang bzw. den Abschnitt des Stranges der Rohmasse in einen Darm oder ein ähnliches Hüllenmaterial einzubringen und erst dann in die Stützform einzulegen. Es wird jedoch für die Durchführung des Verfahrens besonders bevorzugt, eine solche Hülle fortzulassen und den Strang also darm- bzw. hüllenlos in einem Abschnitt in die Stützform einzulegen. Auf diese Weise kann der grundsätzlich nicht benötigte Darm bzw. die Hülle eingespart werden, was den Herstellungsprozess vereinfacht und letztlich auch kostengünstiger macht.

Um z.B. ein Anhaften der in die Stützform eingelegten Rohmasse zu verhindern, und/oder um ein Anschmutzen der Stützform zu vermeiden, kann vor dem Einlegen der Rohmasse in die Stützform in diese ein Tuch, eine Folie oder eine vergleichbare Schicht eingelegt werden, die dann während der Reifung praktisch eine Zwischenschicht zwischen der Stützform und der zur Rohwurst heranreifenden Rohmasse bildet.

Um eine besonders gute Durchlüftung zu erreichen und der Rohmasse während des Reifungsprozesses das "Atmen" zu ermöglichen, kann die Stützform mit Öffnungen versehen bzw. perforiert sein.

Ein schon im Ausgang besonders formstabiler und damit hinsichtlich des Ziels der Erreichung einer geformten schnittfesten Rohwurst besonders geeigneter Wurststrang kann erhalten werden, wenn wie gemäß der Weiterbildung nach Anspruch 4 vorgesehen die Kontur gebende Öffnung eine zylindrisch langgestreckte Tülle ist, durch die die Rohmasse dann als Strang gepresst wird.

Die Stützform ist vorzugsweise eine wieder verwendbare Form, die insbesondere aus einem lebensmittelechten und aus hygienischen Gesichtspunkten geeigneten Material, wie z.B. Edelstahl, gefertigt ist.

Um dem späteren Produkt, sei es dem gesamten Abschnitt oder daraus abglängten Wurstlaiben, eine ansehnliche Optik zu verleihen und dieses auch geschmacklich interessanter zu gestalten, können erfindungsgemäß entweder die nach dem Ausformen erhaltenen noch nicht fertig gereiften Abschnitte oder die durch Ablängen erhaltenen noch zur weiteren Reifung zu behandelnden Wurstrohlinge vor dieser weiteren Reifung oder die nach Abschluss der Reifung erhaltenen fertigen Abschnitte bzw. Wurstlaibe an ihrer Oberfläche mit einer essbaren Schicht, insbesondere einer Schicht aus Kräutern und/oder Gewürzen, überzogen werden.

Ein im Ganzen belassener, erfindungsgemäß hergestellter Wurstabschnitt bzw. -strang kann eine Länge von etwa 1 m aufweisen und ein Gewicht von z.B. 5 kg bis 11,5 kg. Dieser kann als Ganzes in den weiteren Handel gegeben werden oder auch portioniert zu Wurstlaiben.

Für den Vertrieb an Endverbraucher werden derzeit fertig produzierte geformte Wurstlaibe mit einem Portionsgewicht von 100 g bis 500 g bevorzugt, die durch Ablängen von Portionen von dem Abschnitt des Stranges vor oder nach dem fertigen Fermentieren und Reifen gewonnen werden.

### Kurze Beschreibung der Abbildungen der Zeichnungen

Weitere Vorteile und Merkmale ergeben sich aus der nachfolgenden Gestaltung eines Ausführungsbeispiels anhand der beigefügten Figuren. Dabei zeigen:

Fig. 1 in perspektivischer schematischer Ansicht eine für die Durchführung eines erfindungsgemäßen Verfahrens verwendbare Stützform mit "abgeschnittener" vorderer Stirnwand;

Fig. 2 in einer Ansicht wie in Fig. 1 die Stützform gefüllt mit einem im Querschnitt herzförmigen Abschnitt eines Stranges aus Rohmasse für die Reifung zu schnittfester Rohwurst,

Fig. 3 erneut in perspektivischer und schematischer Darstellung die Anordnung der Stützform unterhalb einer Kontur gebenden Tülle einer Abfüllvorrichtung für Wurstrohmasse;

Fig. 4 schematisch und in perspektivischer Ansicht den Abfüllvorgang zum Abfüllen eines Stranges Rohmasse in die Stützform; und

Fig. 5 wiederum in perspektivischer schematischer Darstellung einen durch Ablängen von einem mittels des erfindungsgemäßen Herstellungsverfahrens erhaltenen Abschnittes gewonnenen herzförmigen Wurstlaib.

### Weg(e) zur Ausführung der Erfindung

In den Figuren, die rein schematische Darstellungen sind und insbesondere nicht maßstabsgerecht, ist prinzipiell der Ablauf einer möglichen Ausgestaltungsvariante eines erfindungsgemäßen Herstellungsverfahrens in wesentlichen Schritten gezeigt.

Für das erfindungsgemäße Verfahren zur Herstellung von schnittfester Rohwurst wird in einem ersten Schritt z.B. nach herkömmlicher und allgemein bekannter Weise und üblichen Rezepturen folgend eine Rohmasse bereitet, die jedenfalls zerkleinertes Fleisch und Bakterien für die Fermentation, in der Regel auch noch zerkleinertes Fett, wie z.B. Speck, Salz und Gewürze enthält. Diese Mischung wird durchmengt und dann weiterverarbeitet. Bei der Weiterverarbeitung setzt das erfindungsgemäße Verfahren mit neuartigen Vorgehensweisen an.

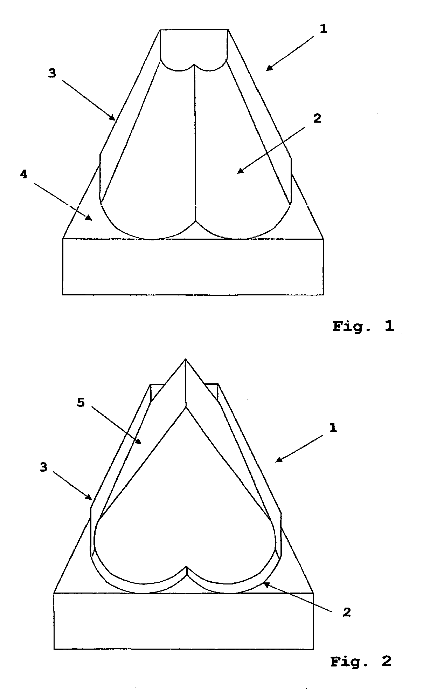

Eines der Herzstücke der Erfindung ist dabei eine Stützform 1, wie sie in einer perspektivischen Darstellung in einem Beispiel in Fig. 1 gezeigt ist. Die Stützform 1 ist hier für eine bessere Darstellung ohne eine vordere Stirnwand gezeigt, in der Praxis wird sie bevorzugt nicht nur die in der Figur im hinteren Bereich dargestellte Stirnwand, sondern auch eine Stirnwand im hier offen gezeigten Bereich aufweisen. Die Stützform 1 hat eine bodenartige Auflage 2, die hier "gewellt" ist nach Art der oberen Kontur eines Herzens. Darüber hinaus verfügt die Stützform 1 über Seitenbereiche 3, die sich aus der Stirnwand / den Stirnwänden und Seitenwänden zusammensetzen. Die Seitenbereich 3 erstrecken sich in diesem Beispiel nicht über die gesamte Höhe der geformten Rohmasse. Prinzipiell ist die Höhe der Seitenbereiche 3 variabel wählbar und hängt von der gewünschten Endform des Wurstabschnittes bzw. eines daraus gewonnenen Wurstlaibes ab. Ihre Höhe muss jedoch mindestens ausreichend bemessen sein, um einem Auseinanderfließen der Rohmasse aus der gewünschten Form entgegenzuwirken. In den Figuren ist zusätzlich noch eine Unterlage 4 dargestellt, auf die die Stützform 1 aufgelegt ist, die für die Erfindung aber keine wesentliche Rolle spielt.

In Fig. 2 ist die Stützform 1 dargestellt, wie sie mit einem Abschnitt 5 eines Stranges der geformten Rohmasse bestückt und gefüllt ist.

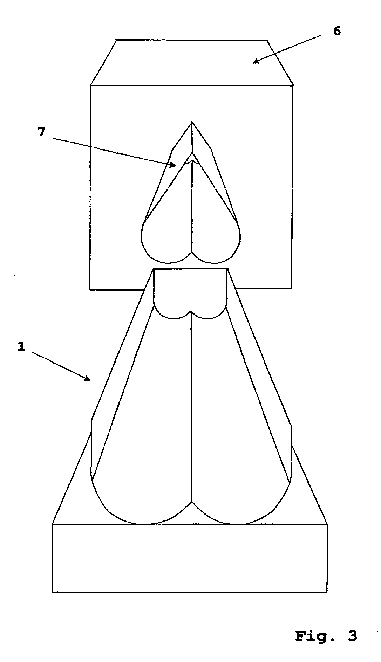

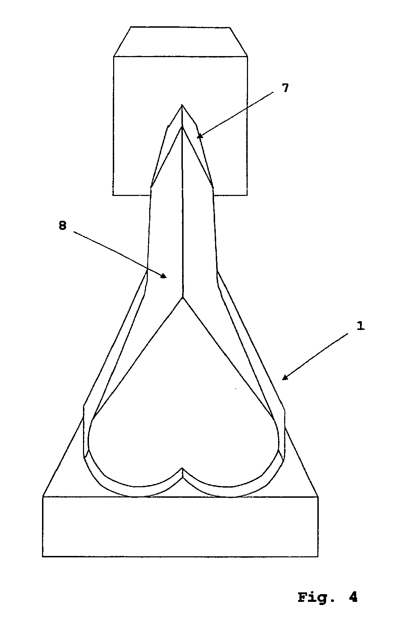

Erfindungsgemäß wird nämlich die Rohmasse durch eine Kontur gebende Öffnung, hier eine Kontur gebende Tülle 7 als Ausgang einer Abfüllvorrichtung 6, in Form eines Stranges 8 hindurchgepresst und in die Stützform 1 eingeführt. Dies ist in den Figuren 3 und 4 veranschaulicht. In Fig. 3 ist die Anordnung der Stützform 1 im Bereich des Auslasses der Kontur gebenden Tülle 7 an der Abfüllvorrichtung 6 dargestellt; in Fig. 4 dann, wie der Strang 8 in die Stützform 1 hineinläuft. Überdeckt der Strang 8 die gesamte Stützform 1 der Länge nach, wird er abgelängt, so dass wieder die Situation wie in Fig. 2 gezeigt entsteht, in der ein Abschnitt 5 der geformten Rohmasse in der Stützform 1 liegt.

In dieser Stellung wird der Abschnitt 5 im in der Figur unteren Bereich, in dem die ansonsten obere Kontur des Herzens aufliegt, durch die bodenartige Auflage 2 in Form gehalten; seitlich sowie am vorderen und hinteren Ende des Stranges sorgen die Seitenbereiche 3 für ein Halten der Kontur und verhindern, dass der Abschnitt 5 auseinanderfließt und die Form verliert.

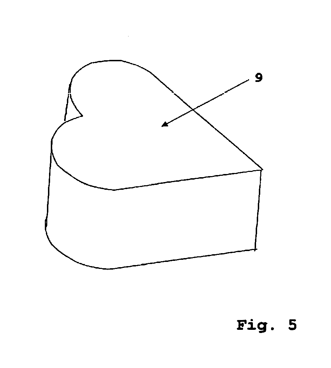

In der Stützform 1 verbleibt der Abschnitt 5 nun während zumindest eines anfänglichen Reifeprozesses bis zum Erhalt einer Formstabilität, und wird dann ausgeformt. Dabei kann der Abschnitt 5 auch den gesamten Reifungsvorgang bis zum Erhalt einer ausgereiften schnittfesten Rohwurst in der Stützform 1 belassen werden. Vor oder nach dem Ausformen kann der formstabile Abschnitt 5 in gewünschten Verkaufsportionen entsprechenden Wurstlaibe 9 unterteilt werden, von denen schematisch eine Veranschaulichung in Fig. 5 gezeigt ist. Alternativ kann der Abschnitt aber auch als Ganzes belassen und so in den Verkauf gegeben werden.

Die fertige Wurst als Wurstlaib oder ganzer Abschnitt kann ggf. noch mit einer essbaren Schicht überzogen werden, z.B. einer solchen mit Kräutern und/oder Gewürzen. Alternativ kann ein solcher Überzug im Verlaufe des Herstellungsverfahrens auf den Abschnitt / die Wurstlaibe auch nach dem Ausformen aus der Stützform, jedoch vor einem fertige Reifen aufgebracht werden.

Um während des Reifungsvorganges ein Atmen des Abschnittes 5 der Rohmasse zu erleichtern und zu verbessern, ist (hier nicht dargestellt) die Stützform 1 jedenfalls im Bereich der bodenartigen Auflage 2 mit Durchbrüchen versehen bzw. perforiert. Ferner kann zwischen den Abschnitt 5 des Stranges 8 der Rohmasse und die Stützform 1 eine Zwischenschicht eingelegt sein, z.B. in Form eines atmungsaktiven tuchartigen Materials. Diese kann ein Anhaften der Rohmasse an der Stützform 1 verhindern und somit ein Ausformen nach Erhalt der Formstabilität erleichtern. Zudem wird damit jedenfalls zu einem gewissen Grad ein Anschmutzen der Stützform 1 vermieden bzw. jedenfalls deutlich verringert.

Das gezeigte Ausführungsbeispiel soll den Umfang der Erfindung in keinem Fall beschränken, dieser wird in seinen wesentlichen Merkmalen in dem nachfolgenden Patentanspruch 1 definiert, in den abhängigen Ansprüchen 2 bis 8 mit weiteren möglichen Ausgestaltungen angegeben.

### Bezugszeichenliste

1. Stützform
2. Bodenartige Auflage
3. Seitenbereich
4. Unterlage
5. Abschnitt
6. Abfüllvorrichtung
7. Kontur gebende Tülle
8. Strang
9. Wurstlaib

## Patentansprüche

1. Verfahren zur Herstellung von schnittfester Rohwurst in geformten Wurstlaiben, bei dem eine Rohmasse enthaltend zumindest zerkleinertes Fleisch sowie Bakterien für eine Fermentation, vorzugsweise ferner wenigstens noch Salz, Fett und Gewürze, zusammengemischt und für eine Abfüllung zur Reifung vorbereitet wird, **dadurch gekennzeichnet, dass** die zur Reifung vorbereitete Rohmasse als Strang durch eine die gewünschte Außenform vorgebende, Kontur gebende Öffnung gepresst und ein Abschnitt des vorgeformten Strangs in eine Stützform eingelegt wird, die wenigstens eine bodenartige Auflage und Seitenbereiche aufweist, die ein Auseinanderlaufen der Kontur des in die Stützform eingelegten Abschnitts des Stranges verhindern, dass die Rohmasse in Gestalt des Abschnittes des vorgeformten Stranges in der Stützform bis zum Erhalt einer Formstabilität reifen gelassen und anschließend ausgeformt wird.

2. Verfahren nach Anspruch 1, **dadurch gekennzeichnet, dass** die Wurstrohmasse unter Auslassung eines Darmes oder vergleichbaren Hüllenmaterials in die Stützform eingelegt wird.

3. Verfahren nach einem der Ansprüche 1 oder 2, **dadurch gekennzeichnet, dass** vor dem Einlegen des Abschnittes des vorgeformten Stranges in die Stützform in letztere ein Tuch, eine Folie oder eine vergleichbare Schicht zur Vermeidung einer Anhaftung der Rohmasse an der Form und/oder zur Vermeidung einer Verschmutzung der Form eingelegt wird.

4. Verfahren nach einem der vorhergehenden Ansprüche, **dadurch gekennzeichnet, dass** die Kontur gebende Öffnung eine zylindrisch lang gestreckte Tülle ist und die Rohmasse durch diese Tülle hindurch als Strang gepresst wird.

5. Verfahren nach einem der vorhergehenden Ansprüche, **dadurch gekennzeichnet, dass** die Stützform eine wieder verwendbare Form ist, vorzugsweise aus Edelstahl.

6. Verfahren nach einem der vorhergehenden Ansprüche, **dadurch gekennzeichnet, dass** der Abschnitt des vorgeformten Stranges nach Erhalt der Formstabilität entweder vor oder nach dem Ausformen durch portionsweises Ablängen in Wurstlaibe aufgeteilt wird.

7. Verfahren nach Anspruch 6, **dadurch gekennzeichnet, dass** die Wurstlaibe bis zum Erreichen eines fertigen Fermentationsgrades weiter reifen gelassen werden.

8. Verfahren nach einem der vorhergehenden Ansprüche, **dadurch gekennzeichnet, dass** der nach dem Ausformen erhaltende Strang oder die nach dem Ablängen erhaltenen Wurstrohlinge oder die fertig gereiften Wurstlaibe an ihrer Oberfläche mit einer essbaren Schicht, insbesondere einer Schicht aus Kräutern und/oder Gewürzen überzogen werden.

9. Verfahren nach einem der vorhergehenden Ansprüche, **dadurch gekennzeichnet, dass** der Abschnitt des Stranges nach dem fertigen Reifen insgesamt ein Gewicht von 5 kg bis 11,5 kg aufweist.

## Claims

1. A process for the production of firm raw sausage in moulded sausage loaves, wherein a raw mixture containing at least ground meat as well as bacteriae for fermentation, preferably moreover at least salt, fat and spices, are mixed together and prepared for filling the same for curing, **characterised in that** the raw mixture prepared for curing is pressed through an opening specifying the desired outer shape and providing a strand-like contour, and a section of the preformed strand is inserted into a support mould, which presents at least one bottom-like support and lateral regions, which inhibit a divergence of the contour of the section of the strand inserted into the support mould, such that the raw mass in form of the section of the preformed strand is left to cure in the support mould until dimensional stability has been reached and then removed from the mould.

2. A method according to claim 1, **characterised in that** the sausage raw mass is inserted into the support mould in the absence of an intestine or comparable casing material.

3. A method according to one of the claims 1 or 2, **characterised in that** before placing the section of the preformed strand into the support mould, a cloth, a foil or a comparable layer is inserted into said mould to prevent the raw mass from sticking to the mould and/or to prevent the mould from getting dirty.

4. A method according to any of the preceding claims, **characterised in that** the opening providing a contour is a cylindrically elongated spout and the raw mass is pressed through said spout to obtain a strand.

5. A method according to any of the preceding claims, **characterised in that** the support mould is a reusable form, preferably made of stainless steel.

6. A method according to any of the preceding claims, **characterised in that** the section of the preformed strand is split in sausage loaves by cutting into portions either before or after removing the mould and once dimensional stability has been reached.

7. A method according to claim 6, **characterised in that** the sausage loaves are left longer to cure until a full degree of fermentation has been reached.

8. A method according to any of the preceding claims, **characterised in that** the strand obtained after removal from the mould or the sausage blanks obtained after cutting up in portions or the fully cured sausage loaves are coated with an edible layer, in particular a layer of herbs and/or spices on their surface.

9. A method according to any of the preceding claims, **characterised in, that** the section of the strand after full curing presents in total a weight of 5 kg to 11.5 kg.

## Revendications

1. Procédé de fabrication de saucisse brute sèche en miches de saucisse conformées, dans lequel on mélange une masse crue comprenant au moins de la viande broyée de même que des bactéries en vue de la fermentation, de préférence en ajoutant du sel, des graisses et des épices, pour préparer l'ensemble à un remplissage en vue de la maturation, **caractérisé en ce que** l'on comprime la masse crue préparée en vue de la maturation sous forme de cordon à travers une ouverture définissant la forme externe souhaitée et conformant le contour et que l'on dispose un tronçon du cordon préformé dans un moule support, qui présente au moins une plaque de fond et des parties latérales, qui empêchent tout écartement du contour du section de cordon disposé dans le moule support, de sorte que l'on laisse mûrir dans le moule support la masse crue sous forme de section de cordon préformé jusqu'à ce que l'on obtienne une stabilité dimensionnelle avant de la sortir du moule.

2. Procédé selon la revendication 1, **caractérisé en ce que** l'on dispose la masse de saucisse crue en l'absence d'un intestin ou d'un matériau d'enrobage comparable dans le moule support.

3. Procédé selon l'une des revendications 1 ou 2, **caractérisé en ceque**, avant de disposer le tronçon du cordon préformé dans le moule support, on mette un torchon, un film ou une couche comparable pour empêcher que ne colle la masse crue au moule et/ou pour éviter de salir le forme.

4. Procédé selon l'une quelconque des revendications précédentes, **caractérisé en ce que** l'ouverture conformant le contour est une filière allongée cylindriquement et que l'on comprime la masse crue à travers ladite filière pour obtenir un cordon.

5. Procédé selon l'une quelconque des revendications précédentes, **caractérisé en ce que** le moule support est un moule réutilisable, de préférence en acier inoxydable.

6. Procédé selon l'une quelconque des revendications précédentes, **caractérisé en ce que** l'on divise le tronçon du cordon préformé après obtention de la stabilité dimensionnelle soit avant soit après sortie du moule par découpe en portions pour produire des miches de saucisse.

7. Procédé selon la revendication 6, **caractérisé en ce que** l'on laisse encore mûrir les miches de saucisse jusqu'au terme de la fermentation.

8. Procédé selon l'une quelconque des revendications précédentes, **caractérisé en ce que** l'on enrobe la surface du cordon obtenu après la sortie du moule ou bien la surface des ébauches de saucisse crue obtenues après la découpe en portions ou bien la surface des miches de saucisse parvenues à maturation, d'une couche cosmétible, en particulier d'une couche d'herbes et/ou d'épices.

9. Procédé selon l'une quelconque des revendications précédentes, **caractérisé en ce que** le tronçon du cordon au terme de la maturation présente au total un poids de 5 kg à 11,5 kg.
